# EUROPEAN PATENT SPECIFICATION

(11) **EP 1 329 685 B1**
(45) Date of publication and mention of the grant of the patent: **10.07.2013**
(21) Application number: 03445003.1
(22) Date of filing: 15.01.2003
(51) Int. Cl.: G01B 3/08, G01B 3/10, G01B 5/00

(54) **Apparatus for measuring the symmetry of a vehicle body**
Vorrichtung zur Ausmessung der Symmetrie einer Fahrzeugkarosserie
Appareil pour mesurer la symétrie d'une carrosserie de véhicule

(30) Priority: 17.01.2002 SE 0200126
(43) Date of publication of application: 23.07.2003
(73) Proprietor: JNE AB, S-597 24 Atvidaberg (SE)
(72) Inventor: Johansson, Hakan, 597 91 Atvidaberg (SE); Nilsson, Lars, 597 94 Atvidaberg (SE)
(74) Representative: Berglund, Erik Wilhelm

(56) References cited:
- EP-A- 0 922 927
- FR-A- 2 587 104
- US-A- 4 150 282
- US-A- 5 507 101

## Description

In order to check and measure the skewness or distortion of crashed cars before as well as during and after repair it is known to use telescopically extendable measuring devices or rulers provided with perpendicularly upwards extending mandrels in both ends. It is also known to use a ruler that is provided with a magnetic fastening bracket in one end (SE 9704438-2). These devices are simple, easy to handle and result in a surprisingly high precision in the work. In reality one however has to write down taken measures or alternatively remember the measures between the measurements. Furthermore the precision is dependent of the skill or practice of the one using the device since an inclining of the ruler may change the result. Likewise the skill and conditions when reading scales are of essential influence.

The object of the invention is to eliminate as much as possible the above problems without impairing the simplicity and speed in the handling, but preferably to improve it further.

From the French patent 2 587 104 a measuring device is known for trees is known with two arms that project from and are slidable on a scale or pantograph mechanism. In one version a tape that is rolled up is used to measure the distance between the arms. The tape can be marked for distance readings.

US 4,150,282 shows an extendible tape that when extended rotate a wheel provided with holes that cooperate with a light source and a light emitter that give a length reading.

US 5,507,101 show a measuring device for car repair with a measuring tape that is unwound and rewound from a spool.

EP 0 922 927 show a measuring ruler for car repair with a magnetic bracket for fastening one end of the ruler to a car body, in particular to the under side.

In accordance with the invention the above problem is solved with a telescopically extendable ruler provided with measurement mandrels or suitable measurement bodies in the ends, the ruler being provided with built in measuring means for the extension of the ruler and transfer of these data or figures to a display, the measuring means is constituted by a tape extending from one end of the ruler to the other end where the tape is wound on a drum, spring biased in the winding direction, which drum is provided with cogs or teeth and that the passage of these is detected and counted by means of a light source and a photo diode and that the drum rotation detected in this way is used to provide a measure of the extending of the ruler the changing diameter of the tape when wound is taken into consideration before the measured values are presented on the display. The previous scale is thus replaced with an electronic measuring and indication of the extended measure. In this way it is no longer necessary that the user is precisely at the correct place on the side of the measuring device in order to see the scale perpendicularly and also from other aspects in the identical way each time. The risk that he shadows the scale that he is to read is also reduced and since the device can remember a measured value for the user it is ready to compare a later taken value even if it is several minutes between them. If so desired one can consider, instead of measuring absolute values to measure differences that is a measure that has been taken on an undamaged part of the car is set to zero and can be compared with a measure taken on a damaged side. This facilitates in particular the measuring during straightening operations. It is also easier to remember small figures than larger ones.

An additional error source at this type of measuring rulers is that the magnet fastener, that in itself allow a fast and simple handling of one person even at long measures, if it is mounted with a slight error or at least in different ways on the left and right side can give different measures even if the measure are actually the same. A little dirt under the magnet gives an inclination of the fastener that may cause a miss-measuring. In order to eliminate this problem it is according to a further development of the invention suggested that instead of joining the ruler to the magnet the ruler is joined to the mandrel while the magnet is moveable. By additionally arrange the ruler moveable in a universal joint arranged principally inside the cone that carry out the centering in relation to the hole the measuring will in reality take place from the center of the hole and there is no influence from the inclination of the magnet, that may be caused by a locally dented surrounding, dirt, underbody coating etc. The probability for the occurring of such damages is far larger than for the hole to change its location in relation to the longitudinal or lateral direction of the car.

Since the force that the centering mandrel or cone is subjected to is exclusively directed towards the vehicle one can consider that the centering tip or cone that is journaled on a ball is provided with some type of snap lock so than one simply snaps on the conical tip on the universal joint. In this way one can use differently wide cones depending on the size of the hole so that it is actually possible to place the universal joint precisely in the center of the hole. One can also contemplate the use of other types of points or tips,

In order further to simplify the invented device it is according to a further development of this suggested that the device is provided with an adjustable spirit level on the side or on top of the ruler and directed along the ruler. In this way it becomes possible to take a measurement between two known and undamaged points in the longitudinal direction of the car. The measuring mandrel in the outer end of the ruler is adjusted to the height required to give an orientation of the ruler parallel to the datum plane of the car. The spirit level is now adjusted to an entirely level position. The spirit level together with its fastening bracket is then turned 180° and then the entire ruler is turned or moved so that its ends change place in relation to the vehicle that is to be measured. The spirit level will now with the ruler placed lengthwise of the car represent a definition of the datum plane of the vehicle allowing quick and normalized measuring. A supposition for this is that the vehicle stands comparatively even laterally but since this normally is the case it is no problem. it is however more common that the vehicle is inclined in its length direction.

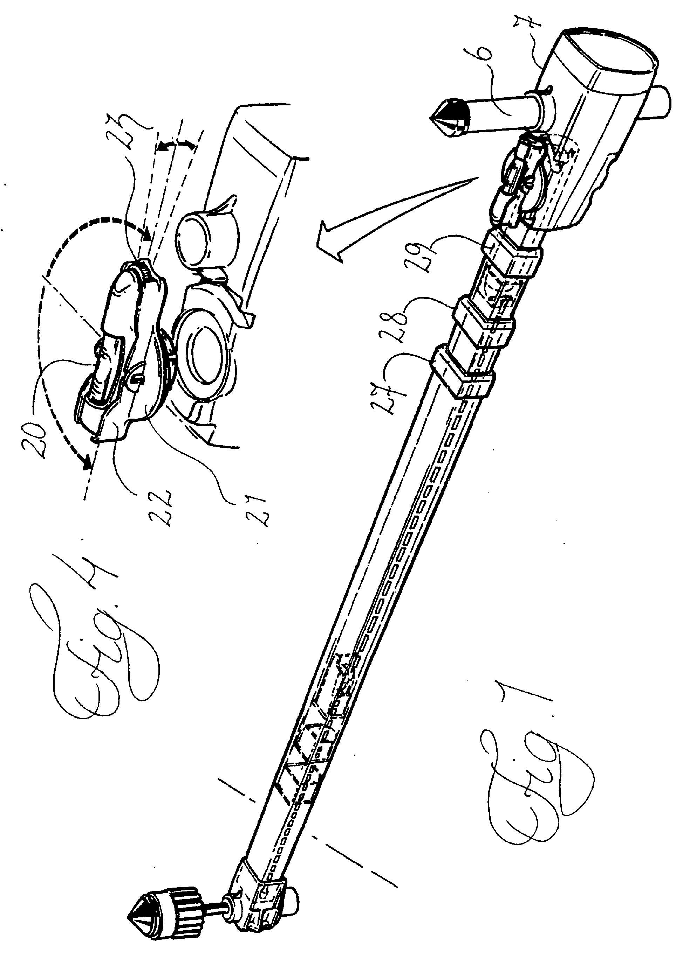

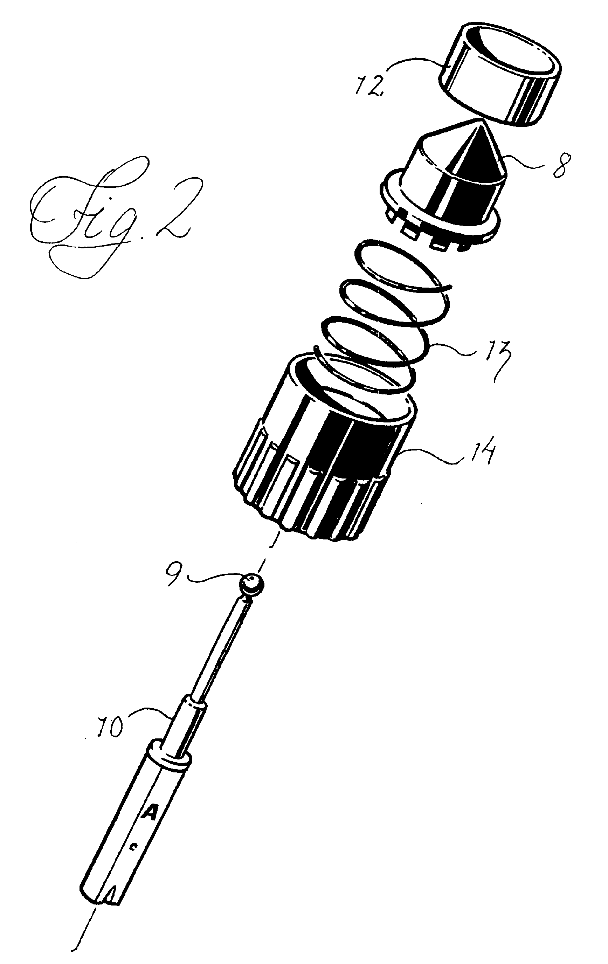

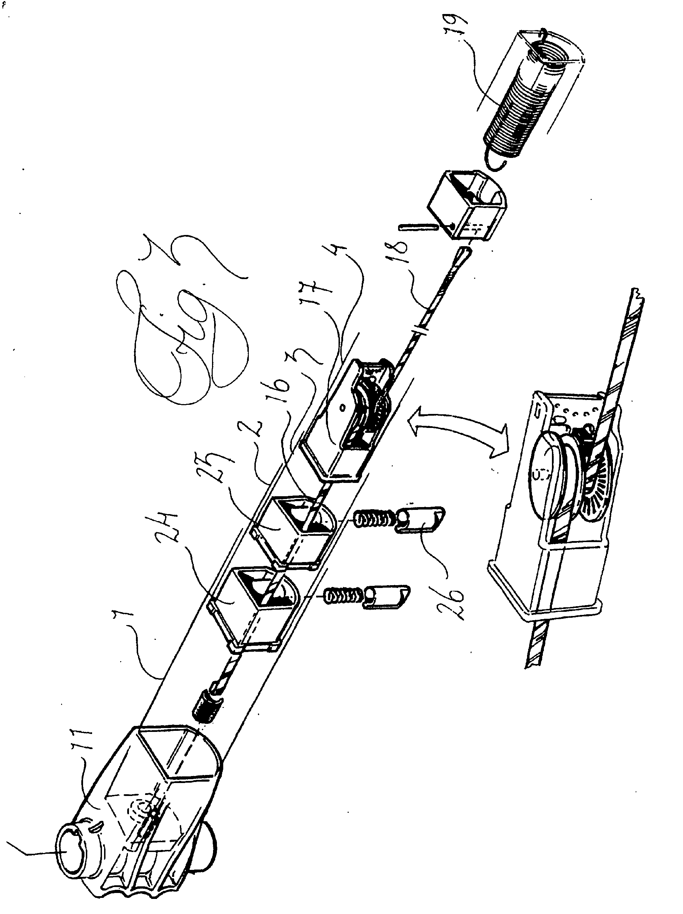

The electronic digital measuring of the extension of the ruler is preferably done by means of a device located in one of the telescoping tubes. The device comprise a thin metal tape that is fastened in the other end of the ruler. The tape runs over a rotatable drum. A spring device is arranged to pretension the drum so that the tape always is kept stretched. The extended length is then detected by the drum or roller for the tape having a toothed or screen pattern provided wheel that pass between a light source and a photo detector generating pulses as the drum or wheel rotates and the pulses can then simply be counted and transformed to measures shown on a display in the end of the ruler, either in millimeters or in inches.
Further advantages and characteristics of the invention are apparent from the following description of a preferred embodiment of the invention with reference to the enclosed drawings. In these Fig 1 shows a measuring ruler in accordance with the invention in a perspective view and partly in section, Fig 2 an exploded view of a magnet fastening bracket, Fig 3 the ruler in a perspective view and Fig 4 an adjustable spirit level means.

The ruler shown in the drawing includes a number of in each other telescoping tubes 1 - 4. The tube device is in the end with the outermost and largest tube provided with a magnetic fastening bracket . in the other end, the one with the thinnest of the tubes 4 a perpendicular mandrel or corresponding is arranged with a shaft that can be locked in a bracket 7.

The magnetic fastening includes a conical mandrel 8 that internally is snapped over a ball that in turn with a short essentially cylindrical shaft 10 is detachably fastened to an end piece 11 in the outer end of the ruler. On the cone a circular magnet 12 is displaceable axially and fastened in a casing 14 holding a pressure spring 13. The casing is by the spring biased away from the cone 8 and the ball 9 towards the ruler itself. The spring is however sufficiently weak in relation to the force exertable by the magnet when after the placing of the cone in the intended measuring hole the magnet is then moved against the force of the spring into contact with the metal around the hole and the resulting attraction force of the magnet push via the ball and the spring the cone against the hole. By choosing cone according to hole diameter by simply snapping off and on different cones the universal joint can be located with its center of movement in level with the hole in itself and the ruler will thus measure distances precisely to the center of the hole.

In the other end of the ruler a digital display is arranged integrated with the bracket 7 for the mandrel 6. The digital display also include a number of control buttons. The display can either be brought to indicate the measured distance between the center of the universal joint in the other end and the tip of the mandrel in the other end of the ruler, alternatively the digital device may be adjusted so that it shows 0 for a first such measure and then only show differences relative this value so that users directly get a measure of how much a measuring point has to be displaced and the vehicle be straightened respectively.

In order to deliver the measures of the length of the ruler to the digital display there is inside the ruler a thin metal tape 16 that extends from the other end (the one with the magnet fastening bracket 5) of the ruler to the inner end of the innermost tube 4 where a measuring unit 17 is fastened to the innermost tube. The tape 16 is in the unit 17 wound on a small drum. On the same drum a band 18 is arranged with the opposite winding direction and extending in the opposite direction, that is towards the bracket 7 to which the band is connected via a pulling spring 19. Since the part of the drum where the band with the spring 19 is wound has a smaller diameter than where the measuring tape 16 is wound the required spring length necessary always to keep the metal tape stretched is reduced.

The drum is further provided with a radially extending rim of small pins or teeth that at the rotation of the drum pass between a light source and a photosensitive element so that each tooth give a pulse. These pulses can then be counted by the digital display device and be used as base measures for the measuring. At the calculation the number of pulses to for instance millimeters and also the changing diameter with which the tape is wound on the drum is considered, this since the diameter changes with the number of turns that have already been wound onto the drum.

Since the above described measuring unit will be very light it becomes also in reality robust and need not to be damaged even if the ruler as such is handled comparatively carelessly.

The measuring unit also constitute a guide for the innermost tube in the next smallest one. Also the two middle tubes are provided with guides 24 and 25 in the inner ends. The guides of the inner ends are also provided with spring biased contact heels 26 to eliminate play. These contact heels also serv to prevent the tubes from being drawn out of each other. The tubes 1 - 3 also have outer guides 27 - 29 that also serv as seals.

The measuring display provided with tube 4 is preferably in the same end provided with a spirit level 20, the inclination of which is adjustable in relation to the longitudinal direction of the ruler. The adjustment of the inclination is carried out through the spirit level being journaled in a bracket 21 in one end 22 and provided with an adjustment screw 23 in the other end. The bracket is furthermore able to swivel in the bracket 7 around an axle arranged vertically and perpendicular relative the length direction of the ruler. In this way it becomes possible to adjust the spirit level so that it is horizontal by first applying the ruler to undamaged parts of the car and with a mandrel length that locates the ruler in the datum plane of the car or parallel therewith. As soon as the spirit level is horizontal the ruler is parallel to the datum plane. In this way also height measurements with great precision becomes possible. If it at the adjustment of the spirit level should be necessary or practical for the ruler to extend in the opposite direction of the vehicle the spirit level bracket 21 is pivoted one half turn around the vertical pivot axle so that despite the turn about of the ruler the spirit level can indicate the datum plane. In this way the number of possible influencing angles and measures is considerably reduced and the precision of executed measurements increase. The spirit level may either as shown be located on top of the ruler facing the vehicle that is to be measured, or alternatively the spirit level may be arranged on the side of the ruler but so that it still can be swiveled 180° to enable the above operation.

The device described above is extremely easy to handle, sure and has good precision and facilitates dramatically the work. The ruler may be provided with different types of adaption pieces in both ends for adaption to the measurements and the objects on which measuring is to take place. Furthermore one can consider instead of measuring, to enter the expected or prescribed value for a measurement first and then the ruler is applied and the difference is taken and displayed.

Since electricity already is at hand in the ruler the spirit level can be made illuminable with a light emitting diode or the like.

## Claims

1. Ruler intended for symmetry measurements of vehicles, that it is telescopically extendable and provided with a display built in measuring means for the extension of the ruler and transfer of data or figures to the display, the measuring means is constituted by a tape extending (16) from one end of the ruler to the other end where the tape is wound on a drum, spring biased in the winding direction, **characterized in that** the drum is provided with cogs or teeth and that the passage of these is detected and counted by means of a light source and a photo diode and that the drum rotation detected in this way is used to provide a measure of the extending of the ruler and that the changing diameter of the tape (16) when wound is taken into consideration before the measured values are presented on the display.

2. Ruler according to claim 1, **characterized in that** the spring bias is achieved by a band (18) or thread wound on the same drum as the tape and fastened in a pull spring (19).

3. Ruler according to claim 2, **characterized in that** the band or thread is wound onto a part of the drum that has a smaller diameter than the one where the tape is wound.

4. Ruler according to claim 1, **characterized in that** the display is arranged in one end of the ruler, in particular in the end with the measure mandrel.

5. Ruler according to claim 1, **characterized in that** display is arranged in one end of the ruler and that the ruler in the opposite provided end is provided with a magnetic fastening means.

## Patentansprüche

1. Stabförmige Messvorrichtung zur Ausmessung der Symmetrie bei Fahrzeugen, welche teleskopartig ausziehbar ist und mit einer in die Messeinrichtung für den Ausziehweg der Messvorrichtung eingebaute Anzeigeeinrichtung, wobei Daten oder Bilder an die Anzeigeeinrichtung übertragen werden, und wobei die Messeinrichtung von einem Band (16) gebildet wird, welches sich von einem Ende der stabförmigen Messvorrichtung zu dem anderen Ende erstreckt, an welchem das Band auf eine Trommel gewickelt ist, welche in Aufwickelrichtung federvorbelastet ist, **dadurch gekennzeichnet, dass** die Trommel mit Klauen oder Zähnen versehen ist, so dass der Vorbeigang derselben mit Hilfe einer Einrichtung aus einer Lichtquelle und einer Fotodiode erfasst und gezählt wird, und dass die auf diese Weise ermittelte Trommeldrehung genutzt wird, um ein Maß für den Ausziehweg der Messvorrichtung bereitzustellen, und dass die Durchmesseränderung des Bandes (16) beim Aufwickeln berücksichtigt wird, bevor die Messwerte an der Anzeigeneinrichtung angezeigt werden.

2. Stabförmige Messvorrichtung nach Anspruch 1, **dadurch gekennzeichnet, dass** die Federvorbelastung mittels eines Bandes (18) oder eines strangförmigen Gebildes erzielt wird, welches auf ein und dieselbe Trommel wie das Band gewickelt und in einer Zugfeder (19) festgelegt ist.

3. Stabförmige Messvorrichtung nach Anspruch 2, **dadurch gekennzeichnet, dass** das Band oder das strangförmige Gebilde auf einen Teil der Trommel gewickelt ist, welcher einen kleineren Durchmesser als jener Teil hat, um den das Band gewunden ist.

4. Stabförmige Messvorrichtung nach Anspruch 1, **dadurch gekennzeichnet, dass** die Anzeigeeinrichtung an einem Ende der stabförmigen Messvorrichtung, insbesondere an dem Ende mit dem Messdorn, angeordnet ist.

5. Stabförmige Messvorrichtung nach Anspruch 2, **dadurch gekennzeichnet, dass** die Anzeigeeinrichtung an einem Ende der stabförmigen Messvorrichtung angeordnet ist, und dass das gegenüberliegende Ende der stabförmigen Messvorrichtung mit einer magnetischen Befestigungseinrichtung versehen ist.

## Revendications

1. Règle destinée à des mesures de symétrie sur des véhicules, qui est télescopiquement déployable et pourvue d'un affichage, incorporée dans des moyens de mesure pour le déploiement de la règle et le transfert de données ou de figures à l'affichage, les moyens de mesure sont constitués par une bande s'étendant (16) depuis une extrémité de la règle à l'autre extrémité, où la bande est enroulée sur un tambour, sollicitée par ressort dans la direction d'enroulement, **caractérisée en ce que** le tambour est pourvu de crans ou de dents et **en ce que** le passage de ceux-ci est détecté et compté au moyen d'une source de lumière et d'une photodiode et **en ce que** la rotation du tambour détectée de cette manière est utilisée pour donner une mesure du déploiement de la règle et **en ce que** le diamètre changeant de la bande (16) lorsqu'elle est enroulée est pris en compte avant que les valeurs mesurées sont présentées sur l'affichage.

2. Règle selon la revendication 1, **caractérisée en ce que** la sollicitation par ressort est accomplie par un ruban (18) ou un fil enroulé sur le même tambour que la bande et arrimé dans un ressort de traction (19).

3. Règle selon la revendication 2, **caractérisée en ce que** la bande ou le fil est enroulé sur une partie du tambour qui a un plus petit diamètre que celui sur lequel la bande est enroulée.

4. Règle selon la revendication 1, **caractérisée en ce que** l'affichage est agencé dans une extrémité de la règle, en particulier dans l'extrémité avec le mandrin de mesure.

5. Règle selon la revendication 1, **caractérisée en ce que** l'affichage est agencée dans une extrémité de la règle et **en ce que** la règle dans l'extrémité opposée fournie est pourvue d'un moyen d'arrimage magnétique.
